# EUROPEAN PATENT APPLICATION

(11) **EP 3 100 914 A1**
(43) Date of publication of application: **07.12.2016**
(21) Application number: 14880978.3
(22) Date of filing: 04.12.2014
(51) Int. Cl.: B60R 5/04, B62D 33/027, B60P 3/40

(54) **EQUIPMENT FOR EXTENDING THE LOADING AREA OF VEHICLES**

(30) Priority: 31.01.2014 ES 201430122
(71) Applicant: Comercial Jope S.L., 31486 Egües (Navarra) (ES)
(72) Inventor: LEGARRETA NUIN, Agustín, E-31486 Egües (Navarra) (ES); OJER PEREA, Daniel, E-31486 Egües (Navarra) (ES)
(74) Representative: Evens, Paul Jonathan
(86) International application number: PCT/ES2014/070898
(87) International publication number: WO 2015/114180

(57) **Abstract**

The invention relates to equipment for extending the loading area of vehicles, for enlarging the loading area of vehicles (1) that have a rear closure with doors (2) that swing out to the sides, the extension equipment comprising a base platform formed by a central plate (3) and complementary side plates (4), the assembly of which is arranged between the rear closing doors (2) of the vehicle (1), supported on the rear edge of the floor of the loading area and being held as an overhang by straps (6); and a rear closing assembly, couplable to said base platform, made up of a central plate (10) which is held to the base platform by means of hinges (12), and complementary side plates (11) which are vertically held to said base platform by means of fitting.

## Description

### Field of the Art

The present invention relates to the adaptation of vehicles to enlarge their loading space, proposing equipment intended for being incorporated as an accessory in vans or similar vehicles provided with a rear closure by means of two doors that swing out to the sides, for the purpose of defining a rear extension of the loading space of the vehicle of application, without changing the original structure thereof.

### Prior Art

Making vehicles that can be adapted for varying the inner space conditions thereof depending on the uses of application, for example by means of providing folding or concealable seats, is known.

However, when use requires a longitudinal dimension that is greater than what the vehicle has, for example for transporting loads the length of which exceeds the dimension of the loading space of the vehicle, which is usually solved by leaving the rear closure of the vehicle open and arranging the objects to be transported projecting through said open rear part.

That solution entails risks of endangering circulation because the objects projecting from the vehicle may cause accidental collisions, and because the rear closing doors of the vehicle have to be held in the open position in a manner that is inadequate.

In that regard, solutions have been conceived for longitudinally extending vehicles by means of structures defining an accessory complement on same, such as the embodiment proposed in patent document ES 2387723, for example, with a structure which is arranged between the open doors of the rear closure of a van-type vehicle, said structure being held by means of the actual door closing mechanisms, combined with engagements in holes made for that purpose in the doors.

Said solution has the drawback that holding the accessory structure is conditioned by the position and the type of the door closing mechanisms of the vehicle of application, and that it is also necessary to make holes in the doors of the vehicle, changing the original structure thereof. In addition, said solution does not contemplate an adaptation to different widths of the vehicles of application.

### Object of the Invention

The invention proposes equipment to be applied as an accessory complement of vans or similar vehicles with a rear closure with doors that swing out to the sides, whereby the loading space of the vehicle of application can be longitudinally extended, being an integral part of the vehicle itself, with an embodiment that is very simple to apply and not requiring any change to the original structure of the vehicle; it furthermore allows for being adapted to different widths of vehicles of application.

This equipment object of the invention comprises a base platform which is arranged as an extension of the floor of the loading area of the vehicle of application, between the rear closing doors of the vehicle arranged in the open position, a rear closing assembly being attached to said base platform, the base platform and the rear closing assembly being held to the structure of the vehicle by straps having tightness or tension regulating devices.

The base platform consists of a central plate and complementary side plates which are attached to said central plate by inserting rods between them, being able to incorporate retaining devices to secure the attachment, said base platform being held by means of supporting its front edge on the rear edge of the floor of the loading area of the vehicle of application, and being retained as an overhang by straps which engage the rear edge of said base platform and are anchored, for example, to the hinging areas of the rear closing doors of the vehicle. The base platform held to the vehicle of application can be further secured by means of threaded rods incorporated in the base platform and being fitted at the rear edge of the loading area of the vehicle.

The rear closing assembly attached to the base platform also consists of a central plate and complementary side plates, the central plate being attached to the central plate of the base platform by means of hinges that allow a lowering rotation, whereas the complementary side plates of said rear closing assembly are held in the vertical position by means of rods integral therewith that are inserted in holes of the side plates and the central plate of the base platform, the central plate of the rear closing assembly being held in the raised closed position by straps attached to the upper edge of said central plate, which straps are attached by means of practicable engagement devices to branches branching off from the straps for holding the base platform as an overhang.

The rear closing doors of the vehicle of application are held in the open position against the sides of the extension equipment of the vehicle by straps that are anchored at the lower edge of the doors and that engage the base platform of the extension equipment on the underside thereof, a binding strap vertically passing along the sides and transversely passing in the upper and lower parts of the vehicle being arranged around said rear doors of the vehicle and the extension equipment, a stop structure or bar being included in the upper part between the doors.

An arrangement defining an extension of the loading space of the vehicle of application between the rear closing doors of the vehicle is thereby obtained, being arranged in a secure and stable manner, without having to modify the actual structure of the vehicle, and said extension being able to be easily assembled to and disassembled from the vehicle of application.

A covering canvas can be arranged on the extension, closing the upper part and covering the sides and the rear part, whereby obtaining an enlarged enclosed area of the loading space of the vehicle of application, the vehicle thereby having a larger capacity and being able to be used for transporting loads of any type or as a mobile home-type living space.

Said equipment object of the invention therefore has advantageous features for the function of enlarging the loading space of vehicles, being novel and preferred with respect to other solutions developed for said application.

### Description of the Drawings

Figure 1 shows an exploded perspective view of an exemplary embodiment of the extension equipment of the loading area according to the invention with respect to a van-type vehicle.
Figure 2 is a perspective view of the extension equipment of the loading area arranged in the vehicle of application without the rear closing assembly of the extension equipment.
Figure 3 is a perspective view of the central plate and a complementary side plate of the base platform of the equipment of the invention according to an exemplary embodiment, seeing said plates from the underside and separated from one another according to the correlative arrangement for coupling them to one another.
Figure 4 is an exploded perspective view of the rear closing assembly of the equipment of the invention.
Figure 5 is an exploded perspective view of an enlarged detail of the assembly arrangement of one of the complementary side plates of the rear closing assembly of the equipment.
Figure 6 is a perspective view of a van-type vehicle provided with an extension of the loading area according to the invention, a covering canvas being incorporated on the extension.
Figure 7 is an exploded perspective view of an upper separating structure between the rear doors of the vehicle of application of the equipment of the invention, with a complement for covering the free side area existing in the part of the shortest door when said rear doors of the vehicle of application are not the same.
Figure 8 is a perspective view of the assembly in the preceding figure coupled to a vehicle with rear doors that are not the same.
Figure 9 is a perspective view seen from the upper side of a particular embodiment of the equipment of the invention with an upper separating structure of rear doors that are not the same in a vehicle of application.
Figure 10 is a perspective view of the assembly in the preceding figure seen from the underside.

### Description Detailed of the Invention

The object of the invention relates to structural equipment intended for extending the loading area of van-type vehicles (1) or the like provided with a rear closure with doors (2) that swing out to the sides for the purpose of enlarging the capacity of the vehicle (1) for the function of transporting loads or for other uses of application.

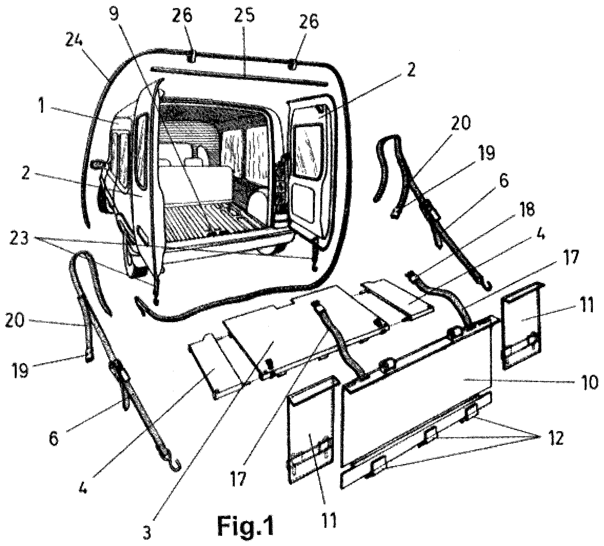

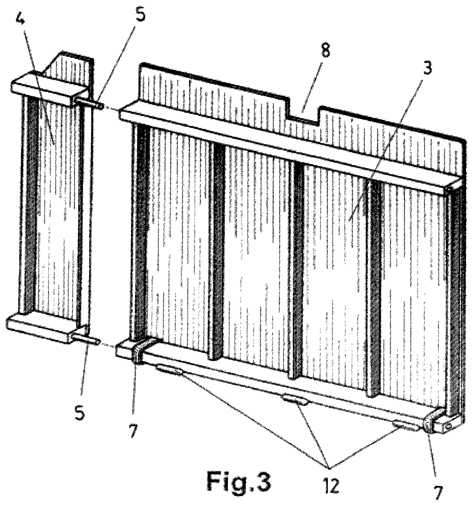

As shown in Figure 1, the equipment object of the invention comprises a base platform made up of a central plate (3) and complementary side plates (4), the complementary side plates (4) being attached to the central plate (3) by inserting rods (5) between them, as seen in Figure 3, such that one and the same central plate (3) combined with complementary side plates (4) which adjust to the width of the vehicle (1) of application can be used for being adapted to vehicles (1) having different widths. It has been envisaged that the central plate (3) and the complementary side plates (4) are furthermore attached to one another with retaining devices (not depicted) to prevent decoupling, thereby assuring the attachment of the assembly of the base platform.

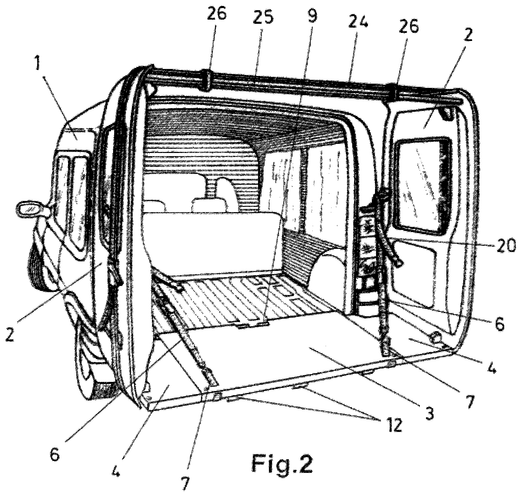

In relation to the vehicle (1) of application, the base platform is arranged by supporting the front edge of the central plate (3) and of the complementary side plates (4) on the rear edge of the loading area of the vehicle (1), the assembly of said base platform being held as an overhang by straps (6) which are anchored to the hinging areas of the doors (2) of the vehicle (1) and the other end of which engages slings (7) arranged at the rear edge of the central plate (3) of the base platform, as seen in Figure 2.

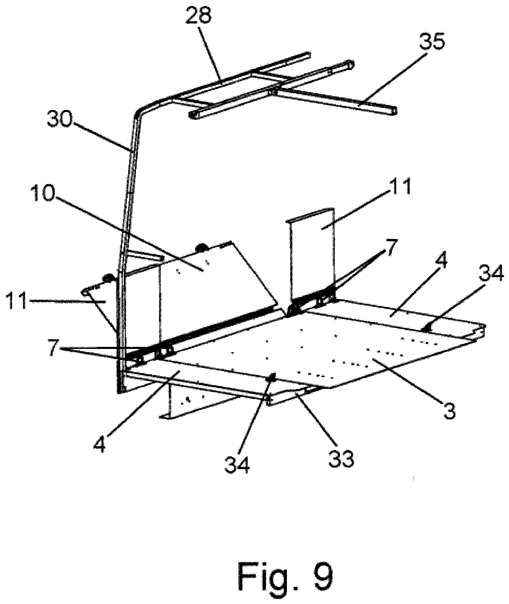

In one embodiment, as seen in Figure 9, it has also been envisaged that the complementary side plates (4) of the base platform have slings (7) or similar means for anchoring the straps (6) in the case of particularly wide vehicles (1) of application, for the purpose of preventing said straps (6) from being located in a position that hinders use of the mentioned base platform.

To support the assembly position on the rear edge of the loading area of the vehicle (1) of application, the central plate (3) of the base platform is provided with one or more notches (8) that allow overcoming the engagements (9) for closing the doors (2) of the vehicle (1), and there can be several notches (8) made in certain areas of the edge of the central plate (3), for overcoming the engagements (9) for closing the doors (2) of different vehicles (1) of application.

For the purpose of assuring the hold to the vehicle (1) of application, it is furthermore envisaged that the central plate (3) is provided with threaded rods (not depicted) projecting towards the front below the front part of said central plate (3), whereby forming a fitting at the rear edge of the loading area of the vehicle (1) of application, the base platform therefore being held in the vertical direction, without being able to be raised with respect to the support on the rear edge of the loading area of the vehicle (1) of application. Said threaded rods furthermore allow regulating the front stop of the base platform with respect to the rear edge of the loading area of the vehicle (1) of application in order to suitably establish the position of said base platform.

The front stop of the base platform against the rear edge of the loading area of the vehicle (1) of application is formed by means of a crosspiece (33) comprised in the central plate (3) and the complementary side plates (4) in the lower part, as seen in Figure (10), and it has been envisaged that said crosspiece (33) is movable for regulating the extent to which the base platform projects as an overhang with respect to the rear edge of the loading area of the vehicle (1) of application, depending on the dimension of the doors thereof.

In addition, a ring (not depicted) is incorporated for anchoring the assembly of the hinges of the rear doors (2) of the vehicle (1) of application, said ring being held by means of one of the set screws of the hinges, thereby allowing the engagement of the straps (6) for holding the base platform as an overhang in that area of the hinges of the doors (2) of the vehicle (1) by means of carabiners incorporated in those straps (6).

As a possible solution, the engagement or anchoring of the straps (6) for holding the base platform as an overhang to the anchoring normally found in the roof of vehicles (1) for assembling a roof rack.

It is furthermore envisaged that the central plate (3) and/or the complementary side plates (4) of the base platform incorporate rings (34), as seen in Figure 9, for anchoring the loads transported on the extension equipment in the vehicle (1) of application.

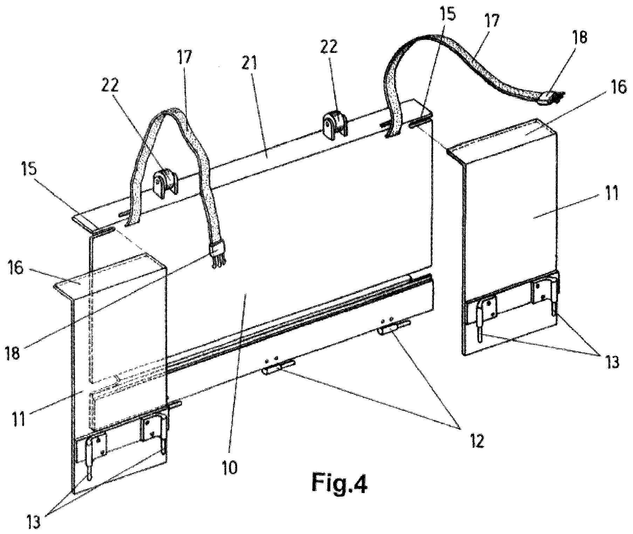

There is coupled to the base platform a rear closing assembly (Figures 1 and 4), which is in turn made up of a central plate (10) and complementary side plates (11), the assembly of which likewise allows being adapted to the width of the vehicle (1) of application, using one and the same central plate (10), combined with complementary side plates (11) which adjust to the width of the vehicle (1) of application in each case.

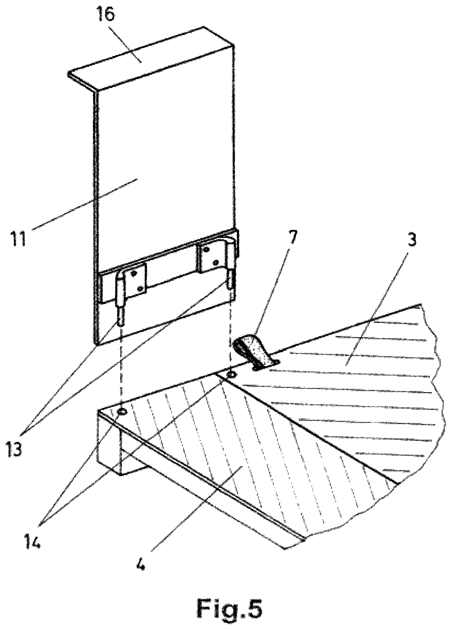

The central plate (10) of said rear closing assembly of the equipment is attached to the central plate (3) of the base platform by means of hinges (12) forming a pivoting articulation of said central plate (10) of the rear closing assembly between an open position and a closed position; whereas the complementary side plates (11) are held in the vertical position by inserting rods (13) incorporated in said plates (11) into holes (14) in the central plate (3) and in the complementary side plates (4) of the base platform, as seen in Figure 5.

In the closed position of the rear closing assembly, the central plate (10) of said rear closing assembly of the extension equipment is supported against the complementary side plates (11), said central plate (10) having grooves (15), in which respective flanges (16) comprised in the complementary side plates (11) perpendicular thereto at the upper edge are fitted when said central plate (10) is in the closed position, whereby the central plate (10) itself forms a vertical retention of the complementary side plates (11), preventing the latter from becoming decoupled from the assembly and not being held to the base platform.

On the edge opposite the edge where the hinges (12) are located, the central plate (10) of the rear closing assembly of the equipment incorporates straps (17)having at the free end a coupling element (18) for being coupled to practicable engagement devices (19) of the end of branches (20) branching off from the straps (6) for holding the base platform as an overhang, such that the mentioned central plate (10) of the rear closing assembly is held, in the closed position, by means of said straps (17), being able to be held and released easily by means of the practicable engagement devices (19).

The central plate (10) of the rear closing assembly also has a perpendicular flange (21) at the edge opposite the hinges (12), rollers (22) being incorporated in said flange (21) for abutting with the ground when said central plate (10) is lowered to the open position in the assembly arrangement of the equipment on the vehicle (1) of application, in order to prevent said support on the ground of said central plate (10) of the rear closing assembly from becoming stuck in the ground, hindering the lifting thereof to the closed position.

In the arrangement for assembling the extension equipment on the vehicle (1) of application, the rear closing doors (2) of the vehicle (1) are held against the sides of the extension equipment by straps (23) which are anchored at the lower edge of the doors (2) and engage one another under the central plate (3) of the base platform, so the assembly of the base platform remains fixed between the doors (2) of the vehicle (1), the mentioned straps (23) forming a vertical support of the complementary side plates (4) for stability thereof.

Furthermore, in that arrangement the doors (2) of the vehicle (1), with the extension equipment arranged between them, are vertically surrounded on the outer sides and transversely above and below them by a binding strap (24) that keeps the entire assembly securely attached, incorporating between the doors (2), in the upper part, a bar (25) acting as a separating stop between said doors (2), which allows the tightening of the binding with the strap (24) without the risk of deforming them. It is envisaged that the bar (25) is telescopic, being able to be selectively locked at different length positions for being adapted to vehicles (1) of different widths. According to one embodiment, said bar (25) is held in the position in which it is between the doors (2) of the vehicle (1) of application by means of hook-like elements (26) arranged in the binding strap (24) itself, thereby making assembly easier.

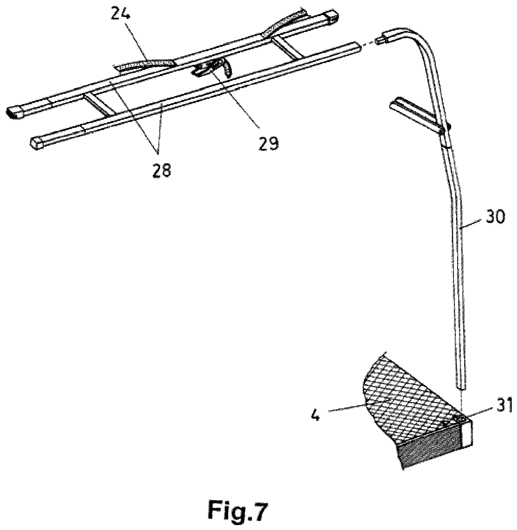

According to one embodiment, the upper separating stop bar (25) between the doors (2) of the vehicle (1) of application can be replaced with a structure (28) formed by two parallel telescopic bars with crosspieces attaching one to the other, as seen in Figure 7, where the binding strap (24) of the doors (2) of the vehicle (1) of application can be arranged against the extension equipment along the inside of one of the bars of said structure (28), emerging in an area thereof to be coupled to a tensing device (29).

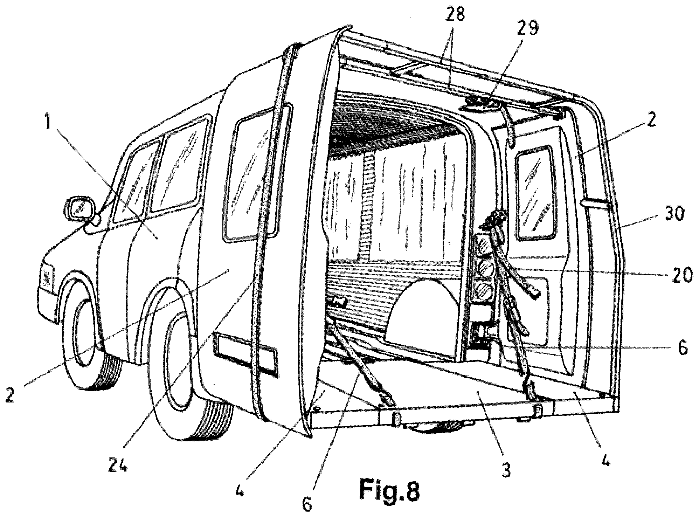

In the case of vehicles (1) the rear closing doors (2) of which are not the same, as seen in Figure 8, the upper separating stop structure (28) is supported with its two longitudinal parallel bars against the door (2) that is largest in size of the vehicle (1) of application, whereas only one of said longitudinal bars of the structure (28) is supported against the door (2) that is smaller in size, a complementary substructure (30) being coupled as an extension of the other longitudinal bar, whereby covering the free side space left on the side of the mentioned door (2) that is smaller in size with respect to the side of the door (2) that is larger in size, said complementary substructure (30) being held in the lower part by means of being fitted in an insertion housing (31) provided in the corresponding complementary side plate (4) of the base platform of the extension equipment.

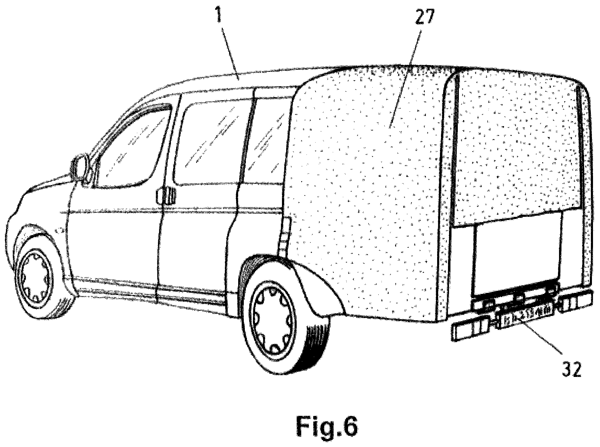

As seen in Figure 6, the incorporation of a covering canvas (27) on the extension of the vehicle (1) of application defined by means of the equipment of the invention, held by any conventional means, is envisaged, said canvas (27) covering the upper part, the sides and the rear part of the extension of the vehicle (1), whereby defining an enclosed area in the extension of the loading area of the vehicle (1).

It is envisaged that said covering canvas (27) of the extension defined in the vehicles (1) of application with the equipment of the invention has bellows-shaped areas, thereby allowing the dimensional adaptation of one and the same canvas (27) for different vehicles (1) of application of the extension with the equipment of the invention.

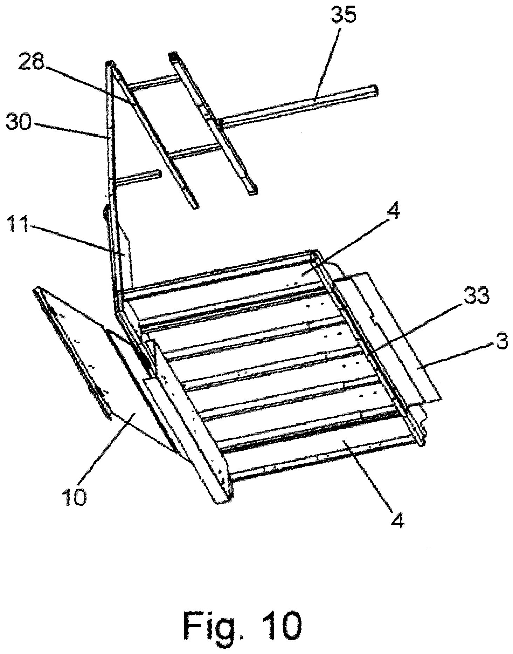

For arranging the mentioned covering canvas (27) of the extension, the upper separating stop bar (25) or the structure (28) between the doors (2) of the vehicle (1) of application are provided with a perpendicular rod (35) in the mid area, as seen in Figures 9 and 10, whereby defining a support with respect to which the canvas (27) defines two slopes facilitating rain water run-off, thereby preventing the canvas (27) from forming a pool where water accumulates.

The anchors of the roof of the vehicle (1) of application intended for assembling a roof rack can also be used for holding the covering canvas (27) of the extension. It is envisaged the covering of the rear part of the extension of the vehicle (1) with said canvas (27) is closed with brackets (not depicted) incorporated in the central plate (10) and in the complementary side plates (11) of the rear closing assembly of the equipment of the extension, said brackets going through grommets (not depicted) in the canvas (27) to include through the brackets a cable which is attached to a lock at its ends, thereby defining a seal for the closure.

When the rear closing doors (2) of the vehicle (1) of application are not the same, the existing free side space in the extension in the part of the door (2) that is the smallest in size of the vehicle (1) can also be covered with the complementary side plate (11) of the rear closing assembly corresponding to that side of the door (2) that is smaller in size, said complementary side plate (11) being able to have an angular configuration to that end for defining with one of the parts the function as complementary side plate (11) of the rear closing assembly and with the other part covering the free side space of the extension, between the rear closing assembly and the door (2) that is smaller in size of the vehicle (1) of application.

Below the base platform of the extension equipment of vehicles (1) according to the invention, there is arranged a block (32) incorporating the assembly of legally required rear lights of the vehicles (1) of application of the extension, being envisaged that said block (32) is articulated below the central plate (3) of the base platform of the extension equipment, having an actuator for pivoting it between a stowed lowering position below the mentioned central plate (3) of the base platform and a perpendicular downwardly deployed position with respect to said central plate (3) when the extension equipment is installed in a vehicle (1) of application.

## Claims

1. Equipment for extending the loading area of vehicles, intended for enlarging the space of the loading area of vehicles (1) provided with a rear closure with doors (2) that swing out to the sides, **characterized in that** it comprises a base platform which is assembled between the rear closing doors (2) of the vehicle (1) of application when they are in the open position, and a rear closing assembly couplable to said base platform; the base platform being formed by a central plate (3) and complementary side plates (4) attached thereto, the assembly of which is supported on the rear edge of the floor of the loading area of the vehicle (1) of application, being held as an overhang by straps (6) which engage the rear edge of said base platform; whereas the rear closing assembly is made up of a central plate (10) which is articulated to the rear edge of the central plate (3) of the base platform by means of hinges (12), and complementary side plates (11) which are held in the vertical position to the base platform by means of fitting.

2. The equipment for extending the loading area of vehicles according to claim 1, **characterized in that** the central plate (3) and the complementary side plates (4) of the base platform are attached to one another by inserting rods (5) between them, being able to incorporate attachment retaining devices.

3. The equipment for extending the loading area of vehicles according to claim 1, **characterized in that** the complementary side plates (11) of the rear closing assembly are assembled by inserting rods (13) of said complementary side plates (11) into holes (14) in the central plate (3) and in the complementary side plates (4) of the base platform.

4. The equipment for extending the loading area of vehicles according to claim 1, **characterized in that** the central plate (3) of the base platform incorporates slings (7) at the rear edge, with which the straps (6) holding the base platform as an overhang engage.

5. The equipment for extending the loading area of vehicles according to claim 1, **characterized in that** the complementary side plates (4) of the base platform incorporate slings (7) or similar means for anchoring the straps (6) for holding the base platform as an overhang, in the case of particularly wide vehicles (1) of application.

6. The equipment for extending the loading area of vehicles according to claim 1, **characterized in that** the straps (6) holding the base platform as an overhang are anchored in the hinges of the doors (2) of the vehicle (1) of application.

7. The equipment for extending the loading area of vehicles according to claim 1, **characterized in that** the base platform is held to the doors (2) of the vehicle (1) of application by straps (23) that are anchored at the lower edge of the doors (2) and engage the central plate (3) of the base platform on the underside thereof.

8. The equipment for extending the loading area of vehicles according to claim 1, **characterized in that** the central plate (10) of the rear closing assembly incorporates straps (17) provided at the end with a coupling element (18) for being coupled to practicable engagement devices (19) incorporated in branches (20) branching off from the straps (6) holding the base platform as an overhang, for holding said central plate (10) of the rear closing assembly in the closed position.

9. The equipment for extending the loading area of vehicles according to claim 1, **characterized in that** the central plate (10) of the rear closing assembly has grooves (15) in which flanges (16) comprised in the complementary side plates (11) perpendicular thereto at the upper edge are fitted when said central plate (10) of the rear closing assembly is in the closed position.

10. The equipment for extending the loading area of vehicles according to claim 1, **characterized in that** the central plate (10) of the rear closing assembly has at the edge opposite the hinges (12) a perpendicular flange (21) incorporating rollers (22) for being supported on the floor when said central plate (10) of the rear closing assembly is lowered to an open position.

11. The equipment for extending the loading area of vehicles according to claim 1, **characterized in that** there is around the doors (2) of the vehicle (1) of application with the extension equipment of the loading area incorporated between them a binding strap (24) vertically passing along the sides of and transversely passing above and below the vehicle, a separating stop being arranged in the upper part between the doors (2) by means of a telescopic bar (25) or a structure (28) formed by two parallel telescopic bars with crosspieces attaching one to the other.

12. The equipment for extending the loading area of vehicles according to claim 11, **characterized in that** when the rear closing doors (2) of the vehicle (1) of application are not the same, the upper separating stop structure (28) between the doors (2) is complemented with a substructure (30) covering the free side space existing in the extension on the side of the door (2) that is the smallest in size.

13. The equipment for extending the loading area of vehicles according to claim 1, **characterized in that** a covering canvas (27) is arranged on the extension formed by the rear closing doors (2) of the vehicle (1) of application and the extension equipment incorporated between them.

14. The equipment for extending the loading area of vehicles according to claims 11 and 13, **characterized in that** the upper separating stop bar (25) or the structure (28) between the doors (2) of the vehicle (1) of application incorporates a perpendicular rod (35) in the mid area on which the covering canvas (27) is supported, defining two slopes for rain water run-off.

15. The equipment for extending the loading area of vehicles according to claim 1, **characterized in that** the base platform is supported on the rear edge of the loading area of the vehicle (1) of application, frontally abutting with that edge by means of a crosspiece (33) comprised in the central plate (3) and the complementary side plates (4) in the lower part, which is movable for regulating the extent to which the base platform projects as an overhang with respect to said rear edge of the loading area of the vehicle (1) of application.
